# EUROPEAN PATENT SPECIFICATION

(11) **EP 3 166 908 B1**
(45) Date of publication and mention of the grant of the patent: **09.12.2020**
(21) Application number: 15750299.8
(22) Date of filing: 30.07.2015
(51) Int. Cl.: C04B 35/632, C04B 35/80, B32B 18/00, B28B 1/40, B28B 19/00, C04B 35/10, C04B 35/14, C04B 35/18, C04B 35/486, C04B 35/505, C04B 35/528

(54) **CERAMIC MATRIX COMPOSITES AND PROCESSES FOR THEIR PRODUCTION**
VERBUNDWERKSTOFFE MIT KERAMISCHER MATRIX UND VERFAHREN ZU DEREN HERSTELLUNG
COMPOSITES À MATRICE CÉRAMIQUE ET LEURS PROCÉDÉS DE PRODUCTION

(30) Priority: 30.07.2014 EP 14179129
(43) Date of publication of application: 17.05.2017
(73) Proprietor: Universität Bayreuth, 95447 Bayreuth (DE)
(72) Inventor: KRENKEL, Walter, 95445 Bayreuth (DE); WAMSER, Thomas, 97956 Werbach (DE); SCHELER, Sven, 95448 Bayreuth (DE)
(74) Representative: Vossius & Partner Patentanwälte Rechtsanwälte mbB
(86) International application number: PCT/EP2015/067551
(87) International publication number: WO 2016/016388

(56) References cited:
- EP-A1- 0 511 661
- WO-A1-2006/021038
- US-A- 5 460 637
- US-A- 5 547 622

## Description

The invention relates to ceramic matrix composites ("CMCs"), and in particular ceramic fiber reinforced ceramic ("CFRC") materials. Prepregs and laminates of prepregs for the formation of such materials are provided, as well as processes for the preparation of the prepregs and for the preparation of the final CFRC materials.

Monolithic ceramic materials provide useful characteristics due to their hardness and their resistance against heat and against chemicals, but have the disadvantage that they tend to be brittle. Ductile or quasi-ductile break characteristics can be achieved in ceramic fiber reinforced ceramic materials due to the combination of fibers in a ceramic matrix. As ceramic fiber materials for such composites, continuous fibers, also referred to as continuous fiber rovings, have been used alone or in combination with short fibers (e.g. EP 1 645 410 A2 or DE 10 2010 055 221 A1). The matrix is generally synthesized via impregnation of continuous fiber bundles with ceramic slurries, followed by the winding and/or the lamination of the infiltrated fiber bundles to yield a desired shape. Alternatively, continuous fibers are processed by procedures such as weaving or braiding to provide textile structures which can be impregnated in a subsequent step.

EP1734023A1 and EP1734024 A1 disclose slurries for the preparation of ceramic fiber composite materials which contain specifically treated or selected oxide ceramic powders, and which can be free of organic binders.

WO2006021038 discloses a slurry of a ceramic powder comprising:33,5-37,0 vol% of alumina powder, 10 wt% of glycerol and water.

US5460637A discloses a process for the preparation of a prepreg for a ceramic matrix composite material comprising impregnating fibres with a slurry comprising a ceramic powder, glycerol and water.

The viscosity of a slurry used for the impregnation of ceramic fibers in ceramic fiber reinforced ceramic materials should be low in order to allow a complete and homogeneous impregnation of the fiber structure to be achieved. The consolidated slurry forms the matrix. Shrinkage of the matrix during sintering has to be prevented, because the ceramic fibers withstand shrinkage. That is why a high particle loading of the slurry, which results in a high green-density, is desirable. However, slurries having a high particle load have a high viscosity, and the complete impregnation of the ceramic fibers is difficult especially in the case of high volume bodies, bodies with large surface areas and bodies with a complex shape. For this purpose, prepregs can be advantageously used. However, in order to bring the prepregs in a desired, fixed shape, a temperature treatment such as warm pressing or a complex Sol-Gel-technique is generally necessary. Prepregs which can be conveniently prepared and processed without having to rely on a binder, and which use a water based ceramic powder slurries to form ceramic matrix composites had not been known.

The use of glycerol as a plasticizer for a green body of ceramic tapes containing a binder has been described (Kemr M., Mizuhara H., San Mateo S.: Flexible ceramic tape and method of making same, United States Patent, US4329271, (1982)). However, the use of significant amounts of a binder in a matrix-forming slurry of a ceramic powder is not suitable for the provision of a prepreg. Due to the addition of the binder, the mobility of the fibers and the drapability of the prepreg is limited. J.J. Lanutti and D.E. Clark (Lanutti, J.J., Clark, D.E.: Long Fiber Reinforced Sol-Gel Derived Al2O3 Composites, Mat. Res. Soc. Symp. Proc., 32, 375-381, (1984)) report the fabrication of flexible, fiber-containing tapes with the help of a sol-gel system containing glycerol as an additive. However, in plane shear deformation of the tapes is not possible and the bending angle is limited due to the gel formation, which inhibits manufacturing of complex shaped parts. Moreover, the formation of the gel is an irreversible process, which imposes limitations on the storability, the handling and eventually also the shaping of preforms before the formation of the final ceramic body.

In the preparation of monolithic ceramics referred to as drying induced forming (Jiang S.W., Nakamura S., Tanaka S., Uematsu K.: Drying-induced forming of alumina ceramics using high solid-loaded slurries with addition of glycerol, J. Mater. Res., 22, 244-248 (2007)). the role of glycerol has been investigated. With the addition of glycerol, it is possible to prepare a slurry with a high particle loading and rather low viscosity, which can be dried without shrinkage. In water-based freeze casting, glycerol can be used as a cryoprotectant to modify freezing and to reduce the expansion of water during freezing (S.W. Sofie, F. Dogan, Freeze Casting of Aqueous Alumina Slurries with Glycerol, J. Am. Ceram. Soc., 84, 1459-1464 (2001)).

The present invention provides, as a first aspect, a process for the preparation of a prepreg for a ceramic matrix composite material, said process comprising the steps of:
a) impregnating an arrangement of ceramic fibers with a slurry of a ceramic powder, which slurry contains:
   10 to 40 vol%, based on the total volume of the slurry, of the ceramic powder,
   10 to 20 wt%, based on the total weight of the ceramic powder in the slurry, of glycerol,
   0 to 2 wt%, based on the total weight of the ceramic powder in the slurry, of an organic binder, and
      water;
b) reducing the water content in the slurry which is retained by the arrangement of ceramic fibers after impregnation so as to increase the volume ratio of the ceramic powder in the slurry and to provide a prepreg containing a slurry of a ceramic powder with a volume ratio of the ceramic powder of 45 vol% or more in the slurry.

Moreover, the invention provides a prepreg for a ceramic matrix composite material, comprising an arrangement of ceramic fibers impregnated with a slurry of a ceramic powder, wherein the slurry contains:
45 vol% or more, based on the total volume of the slurry, of the ceramic powder,
10 to 20 wt%, based on the total weight of the ceramic powder in the slurry, of glycerol,
0 to 2 wt%, based on the total weight of the ceramic powder in the slurry, of a binder, and water.

In further aspects of the invention, laminates containing the above prepregs and a process for their production are provided. In yet a further aspect, the invention provides a ceramic matrix composite green body and a process for its preparation, and a process for the preparation of a ceramic matrix composite body, using the prepregs or the laminated prepregs in accordance with the invention.

The preparation of prepregs containing water based, ceramic powder containing slurries which use only small amounts of organic binders or no organic binders at all, and which can be advantageously laminated to provide a precursor structure for a ceramic matrix composite material has not been previously described. The prepregs contain an arrangement of ceramic fibers, typically in the form of a sheet, which is impregnated with a water based slurry of a ceramic powder containing glycerol. Due to the presence of the slurry containing, besides the ceramic powder, glycerol and water, a humid, tacky prepreg can be provided which can be advantageously used for the formation of a precursor structure as mentioned above. The ceramic powder in the slurry forms a matrix around the ceramic fibers during a step of sintering the precursor structure.

The prepregs in accordance with the invention impregnated with a glycerol containing slurry possess an advantageous drapability, and can be provided with tackiness. Thus, they can be conveniently brought into a desired shape, typically as a laminate. It is possible to lay up the prepregs on a supporting shape such as a mold or a plate without requiring a second mold or plate for the application of pressure, as this is done e.g. in a warm-press process. Upon lamination of the prepregs, a fiber content per volume of 30 vol% and more can be achieved in order to obtain advantageous mechanical characteristics. The fibers in the prepreg can rearrange themselves, and excess slurry material can be squeezed out of the arrangement of fibers and/or the laminate. Only low laminating pressures are required, such that damages to the fibers can be avoided. By shaping the prepregs, typically via applying a laminate thereof on a supporting shape, and drying them, a ceramic matrix composite green body can be provided which can be self supporting even with complex and/or large format structures. Even for tacky prepregs, the prepregs can be removed again if necessary during the lay-up process, and can be re-positioned e.g. with a different fiber orientation.

The properties of the slurry which surrounds the ceramic fibers in the prepreg, and in particular the drying characteristics and its humidification are significantly influenced by the addition of glycerol. Glycerol does not evaporate during the further processing (decomposition at 290 °C), and is hygroscopic. Glycerol is water soluble, and shows a dispersing effect for ceramic particles. It has been found that the use of glycerol allows the solid content of the slurry to be adjusted after the impregnation of the arrangement of fibers via the removal of a certain proportion of water, e.g. with a hydrothermal conditioning procedure as explained below.

In an atmosphere with a predetermined temperature and humidity, the slurry will attain an equilibrium state between the glycerol and the water content, independently of the water content of the slurry used during the impregnation step. Due to the adjustment of the water content, it is possible to use a slurry with a low concentration of solids during impregnation of the arrangement of fibers, and a resulting low viscosity. Thus, a complete impregnation of fiber rovings is possible.

Subsequently, a proportion of water is removed from the impregnated arrangement of ceramic fibers, typically via hydrothermal conditioning which can be carried out with advantageous control of the water content e.g. in a climate cabinet. Due to the evaporation of water, the solid content of the slurry surrounding the ceramic fibers is increased. Thus, a shrinking during sintering can be avoided or significantly reduced. Moreover, the removal of a proportion of water can provide a tacky and still flexible semi-finished product containing the desired architecture of ceramic fibers and a slurry, which product is well suited for use as a prepreg. The glycerol facilitates the drying of the prepregs or their laminates without the formation of cracks via the further removal of water to yield a green body. Moreover, the removal of water from the impregnated arrangement of fibers is reversible, and a dried semi-finished product can be re-humidified, e.g. to impart tackiness again, or to adjust the viscosity of the slurry and thus also the flexibility of the prepreg. This provides versatility in the construction of composite bodies, and/or improves the storability of the prepregs. The green body containing only residual amounts of water can provide a non-tacky, self supporting structure.

During sintering, the glycerol remaining in the prepreg or the green body, respectively, is burned out without residues. It can act as a pore forming agent for the ceramic matrix which increases the damage tolerance of the composite material.

A ceramic matrix composite (CMC) material which is provided in the context of the present invention comprises ceramic fibers embedded in a ceramic matrix. Such materials are also referred to as ceramic fiber reinforced ceramic (CFRC) materials.

A prepreg (derived from the term "preimpregnated") is known in the area of CMC materials as a precursor structure for the formation of a ceramic matrix composite body. The prepreg provided by the present invention/by the process of the present invention contains the ceramic fibers included into the CMC body as a reinforcement, and a precursor for the ceramic matrix, i.e. in the present case a ceramic powder, which can be sintered to form this matrix when the prepreg is subjected to further processing. Typically, a prepreg has the form of a sheet. It will be understood that the prepreg should be flexible, such that it is drapable, i.e. it can be adjusted to the surface geometry of a supporting shape. In order to ensure a certain degree of flexibility, the ceramic powder contained in the prepreg is still present in the form of a slurry which surrounds the ceramic fibers, and which contains water and glycerol. Advantageously, the viscosity of the slurry in the prepreg is adjusted via the reduction of the water content in step b) of the process for the preparation of a prepreg such that the slurry retained by the arrangement of fibers after impregnation does not drip off while the prepreg is handled or stored, but that the slurry can still flow or be deformed under a pressure as it is applied when prepregs are laminated, such that surplus amounts of slurry can be conveniently removed during the lamination process.

Preferably, the water content of the slurry surrounding the ceramic fibers in the prepreg is adjusted such that the slurry provides tackiness to the prepreg. For a given amount of glycerol in the slurry, the water content leading to a tacky slurry and thus to a tacky prepreg can be conveniently adjusted by routine trials, and by testing the surface tack by touching the surface of the prepreg. The tackiness can also be specified with a T-Peel test. Preferably, the peel strength, measured with a T-Peel sample made of two laminated prepreg tapes with a width of 25 mm, is at least 0.5 N/25 mm.

The tackiness advantageously facilitates the application of a prepreg onto a supporting shape and/or the assembly of prepregs to form a laminate of prepregs. Typical water contents in the prepregs of the invention range from 5 to 15 wt%, preferably 6 to 10 wt%, based on the total weight of the prepreg. The water content can be measured, e.g., via determination of the weight loss of the prepreg during a drying process in which the water is completely removed.

Typical water contents of the slurry contained in the prepregs of the invention are 5 to 15 wt%, preferably 6 to 13 wt%, and more preferably 8 to 13 wt%, based on the total weight of the slurry. The water content can be measured, e.g., via determination of the weight loss of the prepreg during a drying process in which the water is completely removed.

Thus, in a preferred embodiment, the prepregs provided by the present invention/by the process of the present invention comprise an arrangement of ceramic fibers in the form of a sheet impregnated with a slurry of a ceramic powder, wherein the slurry surrounding the ceramic fibers contains: 45 vol% or more, based on the total volume of the slurry, of the ceramic powder, 10 to 20 wt%, based on the total weight of the ceramic powder in the slurry, of glycerol, 0 to 2 wt%, based on the total weight of the ceramic powder in the slurry, of an organic binder, and water in an amount that the slurry renders the surface of the prepreg tacky.

A ceramic matrix composite green body is also a precursor structure for the formation of a ceramic matrix composite body. Like the prepreg, the green body provided by the present invention/by the process of the present invention contains the ceramic fibers included into the CMC body as a reinforcement, and a precursor for the ceramic matrix, i.e. in the present case a ceramic powder, which can be sintered to form this matrix when the green body is subjected to further processing. It also contains the glycerol. However, its water content is further reduced compared to the prepreg, and the green body may contain no water, or only a small amount that may be re-incorporated after drying from the air due to the hygroscopic properties of the glycerol. Typically, the green body is thus no longer flexible, and preferably it is a self supporting structure, i.e. a structure which retains a predetermined shape without the need for a support. Typically, the water content in a green body is less than 5 wt%, preferably less than 3 wt%, based on the total weight of the green body. The water content can be measured, e.g., via determination of the weight loss of the prepreg during a drying process in which the water is completely removed. As will be understood, it is also preferred that the green body is prepared from a laminate of the prepregs provided by the present invention/by the process of the present invention. Thus a preferred ceramic matrix composite green body is a self supporting green body which comprises: a laminate of two or more sheets of ceramic fibers impregnated with a ceramic powder, 10 to 20 wt%, based on the total weight of the ceramic powder, of glycerol, and 0 to 2 wt%, based on the total weight of the ceramic powder, of an organic binder.

The ceramic fibers forming the arrangement of ceramic fibers contained in the prepreg and the green body and the composite material body are typically bundles of ceramic filaments, which bundles are also referred to as fiber rovings. For example, ceramic fibers for use in the context of the present invention may contain 100 or more of such filaments per bundle. Preferably, they contain 300 or more, and more preferably 500 or more filaments. The maximum number of filaments per bundle is not specifically limited as far as the bundles can be conveniently prepared and handled. For example, fiber bundles with a maximum number of filaments of 50,000, preferably 20,000 can be used, but maximum numbers of 10,000 or even 5,000 filaments per bundle are generally sufficient in the practice of the invention. The filaments typically have diameters in the µm-range, e.g. 3 to 15 µm, preferably 7 to 13 µm. In accordance with the common understanding in the art, the term "bundle" refers in the context of the invention to a combination of filaments with their long axis extending side-by-side. Generally, filaments within the bundle are not intertwined with their neighboring filaments, e.g. by weaving, braiding or other forms of entanglement. However, the bundle as a whole may be twisted.

The ceramic fibers may be selected from continuous fibers, chopped fibers with a length of less than 100 mm, preferably less than 30 mm and more preferably with a length of less than 10 mm, and combinations thereof. Preferred as arrangements of ceramic fibers in the context of the invention are arrangements of continuous ceramic fibers.

Such ceramic fibers, as well as fiber arrangements such as sheets, are commercially available.

As noted above, the arrangement of ceramic fibers in the prepregs provided by the present invention/by the process of the present invention is preferably a sheet of ceramic fibers. Thus, it is also preferred that the laminate of prepregs and the green body formed using the laminate comprises a laminate of sheets of ceramic fibers. Furthermore, suitable arrangements of ceramic fibers include a woven fabric, or a non-woven material such as a non-woven fabric, including a non-crimp fabric. Thus, it is particularly preferred that the arrangement of ceramic fibers which is contained in the prepreg, and laminated in the laminate, is selected from a sheet of a woven fabric formed by continuous ceramic fibers, and a sheet of a non-woven fabric formed by continuous ceramic fibers, including a sheet of a non-crimp fabric formed by continuous ceramic fibers. It will be understood that the shape of the sheet is not particularly limited, and can be suitably adjusted with a view to the shape of the body of the ceramic matrix composite material to be eventually formed. For example, the sheet of ceramic fibers can have a regular form, such as a rectangle or a square form, it can have the form of a tape, or any irregular form adapted to the respective purpose. Typically, the thickness of the sheet of ceramic fibers ranges from 0.25 mm to 10 mm, preferably from 0.25 mm to 3 mm.

Thus, in a further preferred embodiment, the prepregs provided by the present invention/by the process of the present invention comprise an arrangement of ceramic fibers selected from a sheet of a woven fabric formed by continuous ceramic fibers, and a sheet of a non-woven fabric formed by continuous ceramic fibers, including a sheet of a non-crimp fabric formed by continuous ceramic fibers, said sheet being impregnated with a slurry of a ceramic powder, wherein the slurry, which surrounds the arrangement of ceramic fibers in the prepreg, contains: 45 vol% or more, based on the total volume of the slurry, of the ceramic powder, 10 to 20 wt%, based on the total weight of the ceramic powder in the slurry, of glycerol, 0 to 2 wt%, based on the total weight of the ceramic powder in the slurry, of an organic binder, and water in an amount that the slurry renders the surface of the prepreg tacky. Likewise, a preferred ceramic matrix composite green body is a self supporting green body which comprises: a laminate of two or more sheets of ceramic fibers selected from a sheet of a woven fabric formed by continuous ceramic fibers, a sheet of a non-woven fabric formed by continuous ceramic fibers, and a sheet of a non-crimp fabric formed by continuous ceramic fibers, said sheets being impregnated with a ceramic powder, 10 to 20 wt%, based on the total weight of the ceramic powder, of glycerol, and 0 to 2 wt%, based on the total weight of the ceramic powder, of an organic binder.

In terms of ceramic materials suitable for the ceramic fibers, the invention imposes no particular limitations. For example, the arrangement of ceramic fibers may comprise ceramic fibers formed from Al₂O₃, SiO₂, ZrO₂, Y₂O₃, ZrO₂ stabilized by Y₂O₃, yttrium-aluminium-garnet, an alumosilicate such as mullite, SiC, or carbon, or a combination of two or more types of these materials. Such combinations may be blends of ceramics within a fiber, or arrangements comprising fibers of different ceramic materials. Preferred are fibers formed from Al₂O₃, SiO₂, ZrO₂, Y₂O₃, ZrO₂ stabilized by Y₂O₃, mullite, yttrium-aluminium-garnet or SiC.

In the ceramic fibers formed from the above ceramic materials, the content of these materials in the ceramic fibers is generally 90 % by weight or more, more preferably 95 % by weight or more, based on the total weight of the ceramic fibers, or the ceramic fibers consist of the ceramic material.

Ceramic fibers, including sheets of ceramic fibers, may include a sizing agent which is added during their production. It may be useful to remove the sizing agent from the ceramic fibers, e.g. via a heat treatment, before the step a) of impregnating the arrangement of ceramic fibers is carried out.

As noted above, the slurry used in the process for the preparation of a prepreg in accordance with the present invention for impregnating the arrangement of ceramic fibers contains 10 to 40 vol%, based on the total volume of the slurry, of a ceramic powder, 10 to 20 wt%, based on the total weight of the ceramic powder in the slurry, of glycerol, and 0 to 2 wt%, based on the total weight of the ceramic powder in the slurry, of an organic binder.

The ceramic powder contained in the slurry (and thus also in the prepreg and the green body prepared with the slurry) comprises, and preferably consists of, powder particles formed from a ceramic material. The ceramic material is not particularly limited, but it will be understood that the ceramic material should be one which can be sintered to provide a ceramic matrix in the ceramic matrix composite material. Preferred is a ceramic powder comprising powder particles formed from Al₂O₃, SiO₂, ZrO₂, Y₂O₃, ZrO₂ stabilized by Y₂O₃, yttrium-aluminium-garnet, an alumosilicate such as mullite, SiC, or carbon, or a blend of powder particles of two or more types of these materials. Generally, reference to powder particles formed from a ceramic material means that the particles consist of this ceramic material. Preferred are powders comprising particles formed from Al₂O₃, SiO₂, ZrO₂, Y₂O₃, ZrO₂ stabilized by Y₂O₃, mullite, yttrium-aluminium-garnet or SiC. Particularly preferred are powders consisting of particles formed from Al₂O₃, SiO₂, ZrO₂, Y₂O₃, ZrO₂ stabilized by Y₂O₃, mullite, yttrium-aluminium-garnet or SiC. The ceramic material of the ceramic fibers and of the ceramic powder may be identical or different.

Preferably, the powder particles have an average particle size (volume average, as determined e.g. by laser diffraction) of 3 µm or less, more preferably 2 µm or less, and in particular 1 µm or less. Also, it is preferred that the average particle size is 0.1 µm or more. It is also preferred that particles with a particle size of > 25 µm, as determined by laser diffraction, are absent, and more preferred that particles with a particle size of > 15 µm are absent. Ceramic powders of different particle sizes are commercially available. If necessary, the particle size can be adjusted, e.g. by milling.

A particularly preferred slurry is one wherein the ceramic powder particles have a bimodal particle size distribution (volumetric fraction vs. particle size, as determined by laser diffraction), showing a peak in the range of 0.05 to 0.3 µm, preferably in the range of 0.08 to 0.2 µm and a peak in the range of 0.5 to 3 µm, preferably in the range of 0.7 to 1.2 µm. Preferably, the two peaks do not overlap. Moreover, it is preferred that the peak in the range of 0.05 to 0.3 µm, preferably in the range of 0.08 to 0.2 µm accounts for a volumetric fraction of 3 to 25 % by volume, based on the total volume of the particles, and the peak in the range of 0.5 to 3 µm, preferably in the range of 0.7 to 1.22 µm, accounts of 75 to 97 % by volume. The volumetric fraction of the particles of the respective sizes can be determined, if necessary, from the cumulative amount of particles determined via laser diffraction. However, as a rule these preferred slurries can be conveniently prepared by mixing the desired relative amounts of ceramic particles of the desired size.

The slurry as used for the impregnation in step a) of the process for the preparation of a prepreg in accordance with the invention has a content of the ceramic powder of 10 to 40 vol%, preferably 25 to 40 vol.%, based on the total volume of the slurry.

The liquid phase of the slurry contains 10 to 20 wt%, based on the total weight of the ceramic powder in the slurry, of glycerol, and further contains water. In addition to glycerol and water, other solvents, such as organic solvents may be added to the slurry. However, for economic and environmental purposes, it is preferred that at least 80 vol%, preferably 90 vol% of the liquid phase of the slurry (as determined at 20 °C) are glycerol and water, and it is most preferred that the liquid phase consists of glycerol and water. Preferred contents of glycerol in the slurry are 12 wt% or more, more preferred are 13 wt% or more, based on the total weight of the ceramic powder in the slurry.

Apart from the ceramic powder, the slurry may contain additives which facilitate the handling of the slurry, the impregnation and/or the drying and sintering of the slurry to form a ceramic matrix. Such additives include in particular a dispersant. Such a dispersant, if present, is typically added in amounts of up to 2 wt%, based on the total weight of the solids in the slurry. Suitable dispersants are e.g. water soluble polymers with a high number of ionic groups, such as carboxylic acid groups in protonated or ionic form covalently attached to the polymer chain. A preferred dispersant is an acrylic acid polymer or copolymer. For the copolymer, it is preferred that the content of polymerized acrylic acids units is 50 mol% or more, more preferably 70 mol% or more. Particularly preferred is polyacrylic acid. The dispersant typically is a low molecular weight polymer, e.g. with molecular weights of < 5000 g/mol, in particular < 2000 g/mol.

In the slurry used in the process in accordance with the invention, and in the prepregs provided by the present invention/by the process of the present invention, an organic binder is not needed. Also, a paraffin or a wax is not needed to provide structural support for the arrangement of ceramic fibers impregnated with the slurry. In fact, significant amounts of organic binder may be detrimental for the prepregs according to the invention, since the mobility of the fibers in the prepregs may be negatively affected by a solidified or solidifying organic binder. Moreover, as noted above, it is one advantage of the prepregs in accordance with the invention that the reduction of water during their preparation is reversible, i.e. the water content of the slurry surrounding the ceramic fibers may be increased again if necessary, e.g. in order to reduce the viscosity of the slurry and to increase the flexibility of the prepreg. Also in this respect, the presence of significant amounts of a solidified or solidifying binder may be less advantageous. Therefore, the slurry contains not more than 2 wt%, based on the total weight of the ceramic powder in the slurry, of an organic binder, preferably 0 to 1.0 wt%, and more preferably 0 to 0.5 wt%. It is particularly preferred that the slurry is free of an organic binder. It will be understood that the same applies for the prepreg and the green body which are prepared using the slurry. Surprisingly, the prepregs in accordance with the invention containing the ceramic powder and glycerol show a sufficient stability and can be provided with an advantageously tacky surface for lamination in the absence of an organic binder or the presence of a small amount thereof.

If an organic binder is used, the binder is typically a polymeric organic binder. Typical polymeric organic binders are polymers with a molecular weight of more than 10,000 g/mol. One class of binders well known for this purpose are binders which can be used as aqueous solutions of polymers, such as polyvinyl alcohol or polyvinyl pyrrolidone. Another class is represented by binders which can be used as aqueous dispersions of polymer particles, such as a polystyrene polymer or a polyacrylate polymer. Typical average particle sizes, as determined e.g. via laser scattering on a particle volume basis, are in the range of 0.1 to 1 µm.

In the light of the above, it is preferred if 95 wt% or more, more preferably 97 wt% or more, and in particular 98 wt% or more of the total solid content of the slurry (including solids dissolved in the mixture of water and glycerol) is provided by the ceramic powder, and 5 wt% or less, more preferably 3 wt% or less, and in particular 2 wt% or less of the total solid content of the slurry is provided by additives, including the dispersant and the organic binder.

It is further preferred that the slurry used to impregnate the arrangement of ceramic fibers consists of the ceramic powder, glycerol, a dispersant, and water.

In order to ensure an effective and homogeneous impregnation of the arrangement of ceramic fibers with the slurry in step a) of the process for the preparation of a prepreg in accordance with the invention, the slurry preferably has a viscosity of less than 10 Pas, more preferably of less than 5 Pas, and even further preferred is a viscosity of less than 3 Pas.

In this context, the viscosity of the slurry can be determined at a shear rate of 1 s⁻¹ and at a temperature of 20°C using a coaxial cylinder viscometer.

The impregnation of the arrangement of ceramic fibers with the slurry in step a) of the process for the preparation of a prepreg in accordance with the invention can be achieved by a variety of methods, including spraying or pouring the slurry onto the arrangement of fibers, immersing the arrangement of fibers in the slurry, or application of the slurry with an appropriate tool. If necessary, it is possible after the impregnation to remove excess slurry material, e.g. using a blade.

After the impregnation in step a) of the process in accordance with the present invention, the water content in the slurry which is retained by the arrangement of ceramic fibers is reduced in step b). Thus, the volume ratio of the ceramic powder in the slurry is increased to 45 vol% or more, preferably 50 vol% or more, and in particular 52 vol% or more, based on the total volume of the slurry. Preferably, the volume ratio of the ceramic particles in the slurry is less than 60 vol% and in particular less than 57 vol%. Typically, the volume ratio of the ceramic powder in the slurry is determined in this context indirectly, via a comparison of the mass of the impregnated arrangement of ceramic fibers before and after the reduction of the water content in the slurry in step b) of the process in accordance with the invention. The volume ratio of the ceramic powder in the slurry used in step a) of the process in accordance with the invention is known or can be conveniently determined directly on the slurry. The amount of slurry retained by the arrangement of fibers after the impregnation can be determined by subtracting the weight of the ceramic fibers from the total weight of the impregnated arrangement of ceramic fibers. The amount of water removed from or remaining in the slurry, and thus also the volume ratio of the fibers in the remaining amount of water can thus be conveniently calculated from the comparison of the weight as indicated above.

The reduction of the water content of the slurry in step b) of the process in accordance with the invention can be carried out in various ways. It will be understood the removal should be carried out in a manner which allows the water to be removed, e.g. via evaporation, while the other components of the impregnated arrangement of ceramic fibers, i.e. the fibers themselves and the further components of the slurry are not affected. It has been found that a step of conditioning the impregnated arrangement of ceramic fibers at a temperature of less than 100 °C and at a relative humidity of less than 100 % allows the water content to be reduced in an advantageous, controlled manner. This conditioning is thus preferred for the reduction of the water content. More preferably the reduction of the water content of the slurry in step b) comprises, and is preferably achieved by, conditioning the impregnated arrangement of ceramic fibers at a temperature of 20 to 40°C and a relative humidity of 60 to 90% for a period of time of 2 to 24 h. For example, the conditioning can take place in an environment providing controlled temperature and humidity conditions, such as in a climate chamber, a climate cabinet, an oven with a controlled humidity atmosphere, or similar devices. The preferred temperature for the conditioning is a temperature of 20 to 30°C. The preferred relative humidity is a relative humidity of 70 to 90%. The preferred time for the conditioning is 4 to 24 h, more preferred are 5 to 24 hours.

Preferably, the water content is adjusted such that a prepreg is obtained which contains a slurry of ceramic particles with glycerol and a sufficient amount of water to result in a tacky surface of the prepreg. For example, the amount of water remaining in the prepreg may range from 5 to 15 wt%, preferably 6 to 10 wt%, based on the total weight of the prepreg.Typical water contents of the slurry contained in the prepregs of the invention are 5 to 15 wt%, preferably 6 to 13 wt%, and more preferably 8 to 13 wt%, based on the total weight of the slurry.

It will be understood that the information provided above with regard to the composition of the slurry and its components used for the step a) of impregnating the arrangement of ceramic fibers continues to apply for the slurry contained in the prepreg after the reduction of water content of step b), apart from the water content.

For example, the slurry contained in the prepreg will also contain 10 to 20 wt%, based on the total weight of the ceramic powder in the slurry, of glycerol, and 0 to 2 wt%, based on the total weight of the ceramic powder in the slurry, of an organic binder. Also the information provided above with respect to the preferred amounts of the constituents continues to apply, e.g. in terms of the lower limit of the content of glycerol, preferred contents of glycerol in the slurry are 12 wt% or more, more preferred are 13 wt% or more, based on the total weight of the ceramic powder in the slurry. As regards the organic binder, the content in the slurry contained in the prepreg is preferably 0 to 1 wt%, more preferably 0 wt%, based on the total weight of the ceramic powder in the slurry. The (optional) presence of a dispersant in an amount of 0 to 2 wt%, based on the total weight of the ceramic powder in the slurry, is also preferred.

As will be understood by the skilled person, the weight ratio of the ceramic fibers contained in the prepreg to the slurry contained in the prepreg may vary significantly depending e.g. on the architecture of the ceramic fibers in the arrangement of fibers, and on their capability to retain the slurry. Moreover, it is possible to increase the volume ratio of the fibers during the processing of the prepreg. For example, the volume ratio of ceramic fibers in the prepreg can range from 15 to 60 vol%, based on the total volume of the prepreg.

In line with the above, a preferred embodiment of the process for the preparation of a prepreg for a ceramic matrix composite material comprises the steps of:
a1) Providing an arrangement of ceramic fibers selected from a sheet of a woven fabric formed by continuous ceramic fibers, and a sheet of a non-woven fabric formed by continuous ceramic fibers, and optionally removing a sizing agent from the arrangement of ceramic fibers;
a2) impregnating the arrangement of ceramic fibers with a slurry of a ceramic powder, which slurry contains:
   10 to 40 vol%, based on the total volume of the slurry, of the ceramic powder,
   10 to 20 wt%, preferably 12 to 20 wt%, based on the total weight of the ceramic powder in the slurry, of glycerol,
   0 to 2 wt%, based on the total weight of the ceramic powder in the slurry, of a dispersant,
   0 to 1 wt%, more preferably 0 wt%, based on the total weight of the ceramic powder in the slurry, of an organic binder,
   the remainder of the slurry being water; and
b) reducing the water content in the slurry which is retained by the arrangement of ceramic fibers after impregnation by conditioning the impregnated arrangement of ceramic fibers at a temperature of 20 to 40°C, preferably 20 to 30°C and a relative humidity of 60 to 90%, preferably 70 to 90%, for a period of time of 2 to 24 h, preferably 4 to 24 h, so as to increase the volume ratio of the ceramic powder in the slurry and to provide a prepreg containing a slurry of a ceramic powder surrounding the ceramic fibers, which slurry contains:
   45 vol% or more, based on the total volume of the slurry, of the ceramic powder,
   10 to 20 wt%, preferably 12 to 20 wt%, based on the total weight of the ceramic powder in the slurry, of glycerol,
   0 to 2 wt%, based on the total weight of the ceramic powder in the slurry, of a dispersant,
   0 to 1 wt%, more preferably 0 wt%, based on the total weight of the ceramic powder in the slurry, of an organic binder,
   the remainder of the slurry being water; and more preferably water in an amount that the slurry contains glycerol and a sufficient amount of water to result in a tacky surface of the prepreg.

The prepreg in accordance with the invention/obtainable from the process in accordance with the invention may have the same shape as the arrangement of ceramic fibers used in step a) of the process, e.g. a shape of a sheet. However, the process in accordance with the invention may also involve a further step of shaping the impregnated arrangement of ceramic fibers obtained in step a) or preferably the prepreg provided in step b). For example, shaping may involve cutting or punching the impregnated arrangement of fibers or the prepreg. Shaping may also involve applying the impregnated arrangement of fibers, or preferably the prepreg onto a supporting shape. Suitable supporting shapes should preferably provide a non-flexible surface, and should preferably be able to withstand a further heat treatment which may be used to form a green body from the prepreg. Typical supporting shapes can be made, e.g., of a metal, or of a ceramic body. As regards the shape of the supporting shape, the process of the invention is not subject to significant limitations. Suitable shapes include molds of various geometries into which a prepreg can be laid, or supports with an outer shape, such as cylinders, onto which the prepreg can be applied. Thus, for example, a prepreg in a tubular shape can be provided by winding the prepreg around a cylindrical supporting shape. Advantageously, the provision of a shaped prepreg can be followed by a further removal of water from the prepreg, such that a self supporting green body is formed in this shape.

A preferred way of processing the prepregs of the present invention/the prepregs obtained by the process of the present invention is the preparation of a laminate thereof. Thus, the invention further provides a process for the preparation of a laminate of prepregs for a ceramic matrix composite material, said process comprising: providing two or more prepregs in accordance with the process of the invention as described above, and laminating the prepregs with each other. The invention also provides a laminated obtainable from the process. It will be understood that, for the embodiments of the invention concerned with a laminate, it is preferred to rely on arrangements of ceramic fibers and prepregs in the form of a sheet. Moreover, it will be understood that the lamination is preferably carried out with prepregs wherein the slurry of ceramic particles contains glycerol and a sufficient amount of water to result in a tacky surface of the prepreg, since the tackiness facilitates the formation and increases the stability of the laminate.

For the lamination of prepregs in accordance with the invention, the prepregs are typically brought in direct contact with each other such that their surfaces touch each other. Once the desired number of prepregs has been combined, the lamination occurs generally via application of pressure. Advantageously, the pressure that needs to be applied for the lamination of the prepregs in accordance with the invention does not need to be high. This is due to the fact that the slurry surrounding the ceramic fibers in the prepreg is still able to flow, and the fibers in a prepreg can still flexibly adjust their position relative to the fibers in a prepreg lying underneath and/or a prepreg lying above in the laminate. Moreover, as noted above, the inherent tackiness of the prepregs that can be provided in accordance with the invention allows the prepregs to be adhered to each other without the need for high pressures. This may also advantageously reduce the load applied onto the ceramic fibers during the lamination process, and prevent the breaking of fibers. Generally, the pressure applied during the lamination process does not exceed 1000 kPa, and preferably does not exceed 100 kPa. For example, the lamination can take place using a mold. Advantageously, a vacuum bag can be used for lamination, e.g. at a remaining pressure in the bag of less than 40 kPa, such as 40 to 5 kPa. Application of heat is usually not required during the lamination process.

Upon lamination of the prepregs, a content of ceramic fibers per volume of 30 vol% and more can be achieved, based on the total volume of the laminate of prepregs. Thus, advantageous mechanical characteristics can be attained. Moreover, due to the flexibility of the slurry contained in the prepregs, the fibers in the prepreg can rearrange themselves, and excess slurry material can be squeezed out of the laminate.

Also in the laminates of the present invention, the weight ratio of the ceramic fibers contained in the laminate to the slurry contained in the laminate may vary significantly depending e.g. on the architecture of the ceramic fibers in the arrangement of fibers, and on their capability to retain the slurry. For example, the volume ratio of ceramic fibers in the laminate can range from 15 to 60 vol%, based on the total volume of the laminate.

In line with the above, another preferred embodiment of the invention concerns a process for the preparation of a laminate of prepregs for a ceramic matrix composite material, which process comprises:
a1) Providing an arrangement of ceramic fibers selected from a sheet of a woven fabric formed by continuous ceramic fibers, and a sheet of a non-woven fabric formed by continuous ceramic fibers, and optionally removing a sizing agent from the arrangement of ceramic fibers;
a2) impregnating the arrangement of ceramic fibers with a slurry of a ceramic powder, which slurry contains:
   10 to 40 vol%, based on the total volume of the slurry, of the ceramic powder,
   10 to 20 wt%, preferably 12 to 20 wt%, based on the total weight of the ceramic powder in the slurry, of glycerol,
   0 to 2 wt%, based on the total weight of the ceramic powder in the slurry, of a dispersant,
   0 to 1 wt%, more preferably 0 wt%, based on the total weight of the ceramic powder in the slurry, of an organic binder,
      the remainder of the slurry being water; and
b) reducing the water content in the slurry which is retained by the arrangement of ceramic fibers after impregnation by conditioning the impregnated arrangement of ceramic fibers at a temperature of 20 to 40°C, preferably 20 to 30°C, and a relative humidity of 60 to 90%, preferably 70 to 90%, for a period of time of 2 to 24 h, preferably 4 to 24 h, so as to increase the volume ratio of the ceramic powder in the slurry and to provide a prepreg containing a slurry of a ceramic powder surrounding the ceramic fibers, which slurry contains:
   45 vol% or more, based on the total volume of the slurry, of the ceramic powder,
   10 to 20 wt%, preferably 12 to 20 wt%, based on the total weight of the ceramic powder in the slurry, of glycerol,
   0 to 2 wt%, based on the total weight of the ceramic powder in the slurry, of a dispersant,
   0 to 1 wt%, more preferably 0 wt%, based on the total weight of the ceramic powder in the slurry, of an organic binder,
   the remainder of the slurry being water; and more preferably water in an amount that the slurry contains glycerol and a sufficient amount of water to result in a tacky surface of the prepreg;
   and laminating two or more prepregs provided in this manner with each other.

The laminates typically comprise 2 to 20, preferably 4 to 10 prepregs, preferably prepregs in the form of sheets, laminated with each other.

In a preferred embodiment, the laminate of the invention contains two or more prepregs, said prepregs each containing an arrangement of ceramic fibers selected from a sheet of a woven fabric formed by continuous ceramic fibers, and a sheet of a non-woven fabric formed by continuous ceramic fibers, and a slurry of a ceramic powder surrounding the ceramic fibers, which slurry contains:
45 vol% or more, based on the total volume of the slurry, of the ceramic powder,
10 to 20 wt%, preferably 12 to 20 wt%, based on the total weight of the ceramic powder in the slurry, of glycerol,
0 to 2 wt%, based on the total weight of the ceramic powder in the slurry, of a dispersant,
0 to 1 wt%, more preferably 0 wt%, based on the total weight of the ceramic powder in the slurry, of an organic binder,
the remainder of the slurry being water; and more preferably water in an amount that the slurry contains glycerol and a sufficient amount of water to result in a tacky surface of the prepreg;
said prepregs being laminated with each other.

Also prior to or after lamination, the prepregs may be shaped. For example, shaping may involve cutting or stitching or punching the impregnated arrangement of fibers or the prepregs or the laminate. Also the laminate can be provided, e.g., on a supporting shape, such as a mold or a plate. Suitable supporting shapes should preferably provide a non-flexible surface, and should preferably be able to withstand a further heat treatment which may be used to form a green body from the prepreg. Typical supporting shapes can be made, e.g., of a metal, or of a ceramic body. As regards the shape of the supporting shape, the process of the invention is not subject to significant limitations. Suitable shapes include molds of various geometries wherein the prepregs can be laid up to form a laminate, including flat (plate-shaped) or curved geometries. Also, supports with an outer shape, such as cylinders, can be used onto which the laminate can be applied. Providing a shaped laminate may be accomplished by applying the prepregs to a supporting shape, and subsequently laminating the prepregs on or with the supporting shape, or by laminating the prepregs, and subsequently applying the laminate to the supporting shape.

As noted above, it is an advantage of the present invention that the flexibility of the prepregs or of the laminates may be increased by increasing their water content, e.g. by conditioning a prepreg or a laminate in a high humidity atmosphere. Thus, the processing of the prepregs or the laminate may be facilitated.

The prepregs or the laminates in accordance with the invention/provided by the process in accordance with the invention may be sintered to prepare a ceramic matrix composite body. Sintering occurs at or above a temperature where any water remaining in the prepreg or laminate subjected to sintering evaporates, the glycerol is decomposed and the particles of the ceramic powder sinter to form a ceramic matrix surrounding the ceramic fibers. Typically, sintering of oxide fiber composites is accomplished in a temperature range from 1100 to 1300 °C, of non-oxide fiber composites in a range from 1400 °C to 1600 °C.

For example, if a ceramic matrix composite material is to be combined with a supporting shape, e.g. to form a protective layer on the surface of the shape, the direct sintering of a prepreg or a laminate applied to a shaped support may be advantageous. For example, this procedure allows the formation of tubes or other support geometries carrying a ceramic matrix composite sheath.

Alternatively, it may be preferable to first provide a prepreg or a laminate of prepregs in accordance with the invention, and to subsequently provide a ceramic matrix composite green body by drying the prepreg or the laminate of prepregs. The ceramic matrix composite green body, which is thus obtained comprises: an arrangement of ceramic fibers impregnated with a ceramic powder, 10 to 20 wt%, based on the total weight of the ceramic powder, of glycerol, and 0 to 2 wt%, based on the total weight of the ceramic powder, of an organic binder. As will be appreciated, the composition and the shape of the arrangement of ceramic fibers in the green body will be the same as for the prepreg or the laminate in accordance with the invention discussed above. Similarly, the composition of the material with which the arrangement of ceramic fibers is impregnated and which thus surrounds the arrangement of ceramic fibers is the same as for the prepreg or the laminate in accordance with the invention, except for the fact that the water content of the material is further reduced. For example, the material surrounding the arrangement of ceramic fibers will also contain 10 to 20 wt%, based on the total weight of the ceramic powder in the slurry, of glycerol, and 0 to 2 wt%, based on the total weight of the ceramic powder in the slurry, of an organic binder. Also the information provided above with respect to the preferred amounts of the constituents continues to apply, e.g. in terms of the lower limit of the content of glycerol, preferred contents of glycerol are 12 wt% or more, more preferred are 13 wt% or more, based on the total weight of the ceramic powder in the material surrounding the arrangement of ceramic fibers. As regards the organic binder, the content in the material surrounding the arrangement of ceramic fibers is preferably 0 to 1 wt%, more preferably 0 wt%, based on the total weight of the ceramic powder in the material surrounding the arrangement of ceramic fibers. The (optional) presence of a dispersant in an amount of 0 to 2 wt%, based on the total weight of the ceramic powder in the material surrounding the arrangement of ceramic fibers, is also preferred.

Also the step of providing a prepreg or a laminate of prepregs during the preparation of the ceramic matrix composite green body may include the shaping of the prepreg or the laminate, as explained above. Drying, in the context of the preparation of the composite matrix green body, refers to the further reduction of the water remaining in the slurry of ceramic particles contained in the prepreg or the laminate. During the formation of the green body, the other components of the prepreg or the laminate of prepregs apart from the water preferably remain unaffected. As will be understood by the skilled reader, the drying can be conveniently accomplished by heating the prepreg or the laminate of prepregs, e.g. at temperatures of 50 to 150 °C, optionally assisted by a vacuum. Typically, the water content in the resulting green body is less than 5 wt%, preferably less than 3 wt%, based on the total weigh of the green body. Preferably, the resulting green body is a self supporting green body.

The weight ratio of the ceramic fibers contained in the green body to the ceramic powder contained in the green body may vary significantly depending e.g. on the architecture of the ceramic fibers in the arrangement of fibers, and on their capability to retain the slurry during the preparation. Also in the green body, the ratio of ceramic fibers to the ceramic powder can be advantageously varied over wide ranges, e.g. from 15 to 60 vol%, based on the total volume of the green body.

In line with the above, another preferred embodiment of the invention concerns a process for the preparation of a ceramic matrix composite green body, preferably a self supporting green body, which process comprises:
a1) Providing an arrangement of ceramic fibers selected from a sheet of a woven fabric formed by continuous ceramic fibers, and a sheet of a non-woven fabric formed by continuous ceramic fibers, and optionally removing a sizing agent from the arrangement of ceramic fibers;
a2) impregnating the arrangement of ceramic fibers with a slurry of a ceramic powder, which slurry contains:
   10 to 40 vol%, based on the total volume of the slurry, of the ceramic powder,
   10 to 20 wt%, preferably 12 to 20 wt%, based on the total weight of the ceramic powder in the slurry, of glycerol,
   0 to 2 wt%, based on the total weight of the ceramic powder in the slurry, of a dispersant,
   0 to 1 wt%, more preferably 0 wt%, based on the total weight of the ceramic powder in the slurry, of an organic binder,
   the remainder of the slurry being water; and
b) reducing the water content in the slurry which is retained by the arrangement of ceramic fibers after impregnation by conditioning the impregnated arrangement of ceramic fibers at a temperature of 20 to 40°C, preferably 20 to 30°C and a relative humidity of 60 to 90%, preferably 70 to 90%, for a period of time of 2 to 24 h, preferably 4 to 24 h, so as to increase the volume ratio of the ceramic powder in the slurry and to provide a prepreg containing a slurry of a ceramic powder surrounding the ceramic fibers, which slurry contains:
   45 vol% or more, based on the total volume of the slurry, of the ceramic powder,
   10 to 20 wt%, preferably 12 to 20 wt%, based on the total weight of the ceramic powder in the slurry, of glycerol,
   0 to 2 wt%, based on the total weight of the ceramic powder in the slurry, of a dispersant,
   0 to 1 wt%, more preferably 0 wt%, based on the total weight of the ceramic powder in the slurry, of an organic binder,
   the remainder of the slurry being water; and more preferably water in an amount that the slurry contains glycerol and a sufficient amount of water to result in a tacky surface of the prepreg;
   optionally laminating two or more prepregs provided in this manner with each other; and further drying the prepreg or the laminate to obtain a ceramic matrix composite green body.

Also in accordance with a preferred embodiment, the invention provides a ceramic matrix composite green body, which body comprises:
an arrangement of ceramic fibers selected from a sheet of a woven fabric formed by continuous ceramic fibers, and a sheet of a non-woven fabric formed by continuous ceramic fibers, said arrangement of ceramic fibers being impregnated with
a ceramic powder,
   10 to 20 wt%, preferably 12 to 20 wt%, based on the total weight of the ceramic powder, of glycerol, and
   0 to 1 wt%, based on the total weight of the ceramic powder, of an organic binder.

The ceramic matrix composite green body in accordance with the invention/provided by the process in accordance with the invention may be sintered to prepare a ceramic matrix composite body. Sintering occurs at or above a temperature where any water remaining in the green body evaporates, the glycerol is decomposed and the particles of the ceramic powder sinter to form a ceramic matrix surrounding the ceramic fibers. Typically, sintering of oxide fiber composites is accomplished in a temperature range from 1100 to 1300 °C, of non-oxide fiber composites in a temperature range from 1400 °C to 1600 °C.

### Example 1:

### Manufacturing of a composite (120 x 100 x 2.2 mm³):

First, a water-based slurry was prepared, the composition of which is shown in the table below. The ceramic powder was a mixture of Al₂O₃-ZrO₂ with a d50 of about 1 µm and a maximum particle size of 5 µm (80 wt% MRS1, Albemarle, 15 wt% TZ-3YE, Tosoh, 5 wt% TM-DAR, Taimicron). The particle loading in the slurry reached about 70 wt%. The amount of glycerol corresponded to 13 wt% glycerol in respect to the powder quantity. The dispersant was 1.5 wt% Sokalan PA 15, BASF. An organic binder was not necessary. The slurry was homogenized with the help of a rolling machine with 3 mm zirconia beads for 2 h.

| Component | Mass [g] |
|---|---|
| Glycerol | 31,8 |
| Water | 68,2 |
| Ceramic powder | 244,8 |
| Dispersant | 3,8 |

As reinforcement, Nextel™610 DF19 fabrics (supplied by 3M) were used. Before impregnation, the PVA-sizing was burned out at 700 °C for 5 h. Impregnation was done by dipping the fiber cloths in the slurry. Before the hydrothermal conditioning for 12 h at 70 % relative humidity at 25 °C, excess slurry was removed from the cloths with a doctor blade. For this purpose, the impregnated fabric was put on a foil. The doctor blade had a level of 750 µm.

The prepregs were laminated by putting 4 prepregs on each other. Pressing was done in a vacuum-bag at a pressure of 40 kPa in the bag for 1 h. Afterwards, to obtain a self-supporting structure, the composite was dried at 50 °C for 12 h. The green composite was sintered at 1225 °C for 2 h.

The water content in the slurry for the impregnation was 19,6 wt%, the water content of the slurry which surrounds the ceramic fibers in the prepreg was 6,3 wt% and 0,9 wt% was the water content in the green composite. The particle loading of the slurry for impregnation was about 38 vol%, after the hydrothermal conditioning it was 55 vol%.

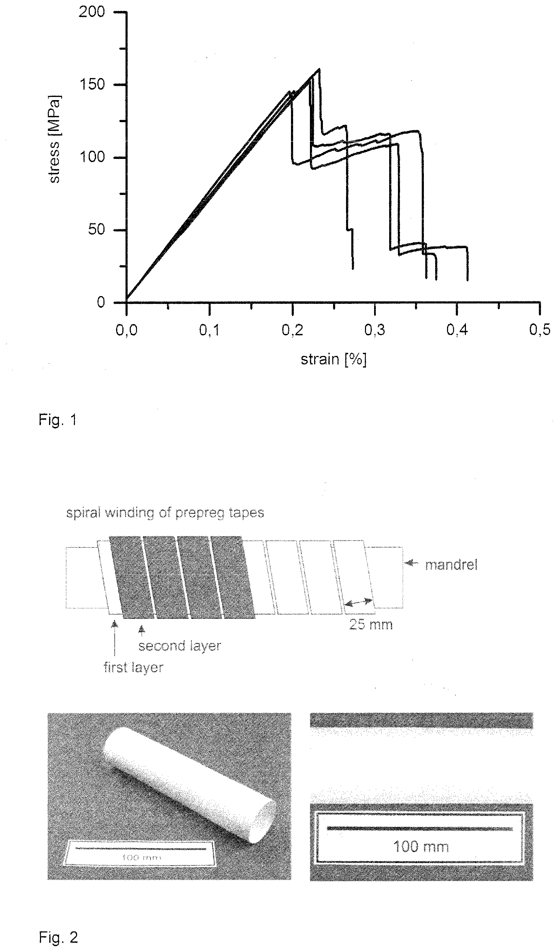

For mechanical characterization of the sintered composite, 4-point bending tests were performed. 5 samples are cut off the plate with a dimension of (120 x 100 x 2.2 mm³). The sample dimensions were 10 x 100 x 2.2 mm³ with a support distance of 75/25 mm. The bending strength was 151 ± 8 MPa. The results are graphically illustrated in Fig. 1.

### Example 2:

### Manufacturing of a cylindrical tube (diameter 35 mm, 150 mm length)

The composition of the slurry was as described in Example 1. The desized Nextel™610 DF11 fabric (supplied by 3M) for impregnation had a dimension of 900 x 10 mm². Hydrothermal conditioning was done at 80 % relative humidity at 25 °C.

The water content in the slurry for the impregnation was 19,6 wt%, the water content of the slurry which surrounds the ceramic fibers in the prepreg was 9,2 wt% and 0,9 wt% was the water content in the green composite after drying. The particle loading of the slurry for impregnation was about 38 vol%, after the hydrothermal conditioning it was 50 vol%.

The prepreg was cut with scissors to stripes with a width of 25 mm and length of 900 mm. This was possible because the slurry fixes the fabric. Two layers of the prepreg tapes were layed on a mandrel with a spiral winding technique as shown in Fig. 2. Before lamination, a separating foil was put on a mandrel to enable demolding. Pressing was conducted in a vacuum-bag at 50 kPa remaining in the bag for 1 h. The removal of the mandrel was possible after drying at 100 °C for 2 h. The self-supporting composite can be sintered at 1225 °C for 2 h without deformation (see Fig. 2).

### Example 3:

### Evolution of the water content during the hydrothermal consolidation.

Three slurries were prepared with addition of different amounts of glycerol. The ceramic powder was a mixture of Al₂O₃-ZrO₂ with a d50 of about 1 µm and a maximum particle size of 5 µm (80 wt% MRS1, Albemarle, 15 wt% TZ-3YE Tosoh, 5 wt% TM-DAR, Taimicron). The dispersant was 1.5 wt% Sokalan PA 15, BASF. Homogenization was done with the help of a rolling machine with 3 mm zirconia beads for 2 h.

| | 10 wt% Glycerol | 13 wt% Glycerol | 16 wt% Glycerol |
|---|---|---|---|
| Component | Mass [g] | Mass [g] | Mass [g] |
| Glycerol | 24,5 | 31,8 | 39,2 |
| Water | 75,5 | 68,2 | 60,8 |
| Ceramic powder | 244,8 | 244,8 | 244,8 |
| Dispersant | 3,8 | 3,8 | 3,8 |

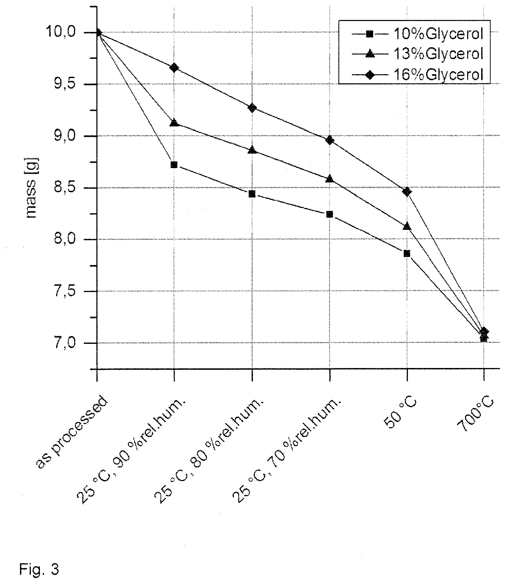

For the measurement, the slurries were put into a cup. The change of mass during hydrothermal conditionung at 25 °C at 90 % relative humidity, 80 % relative humidity, 70 % relalive humidity, after drying at 50 °C and heating up to 700 °C is shown in Figure 3. The duration of each hydrothermal consolidation and drying process was 24 h to reach an equilibrium state.

It can be seen, that the water content of the slurry after the hydrothermal conditioning can be adjusted in a wide range. This allows to adjust the drapability and tackiness of the prepregs. The added amount of glycerol and the conditions of the hydrothermal conditioning can be favorably adapted to the powder composition. For the tested composition, the best results with an advantageous tackiness and drapability were obtained with an addition of 13 wt% glycerol and a hydrothermal conditioning at 70 to 80 % relative humidity and 25 °C as shown in example 1 and 2.

### Brief description of the figures:

Fig. 1 shows the results of the 4-point bending test of the material of Example 1.
Fig. 2 illustrates the manufacture of a cylindrical tube using the process in accordance with the invention, and shows a tube manufactured in this manner.
Fig. 3 shows the properties of a slurry of a ceramic powder subjected to different conditions of temperature and humidity.

## Claims

1. A process for the preparation of a prepreg for a ceramic matrix composite material, said process comprising the steps of:
a) impregnating an arrangement of ceramic fibers with a slurry of a ceramic powder, which slurry contains:
10 to 40 vol%, based on the total volume of the slurry, of the ceramic powder,
10 to 20 wt%, based on the total weight of the ceramic powder in the slurry, of glycerol,
0 to 2 wt%, based on the total weight of the ceramic powder in the slurry, of an organic binder, and
water;
b) reducing the water content in the slurry which is retained by the arrangement of ceramic fibers after impregnation so as to increase the volume ratio of the ceramic powder in the slurry and to provide a prepreg containing a slurry of a ceramic powder with a volume ratio of the ceramic powder of 45 vol% or more in the slurry.

2. The process of claim 1, wherein the reduction of the water content of the slurry in step b) comprises conditioning the impregnated arrangement of ceramic fibers at a temperature of 20 to 40°C and a relative humidity of 60 to 90% for a period of time of 2 to 24 h.

3. The process of claim 1 or 2, wherein the reduction of the water content of the slurry in step b) is carried out such that a prepreg is provided which contains a slurry of ceramic particles with glycerol and a sufficient amount of water to result in a tacky surface of the prepreg, where the tackiness is such that the peel strength measured with a T-Peel sample made of two laminated prepreg tapes with a width of 25 mm, is at least 0.5 N/25 mm.

4. The process of any of claims 1 to 3, wherein the prepreg provided in step b) contains water in an amount of 5 to 15 wt%, based on the total weight of the prepreg.

5. The process of any of claims 1 to 4, wherein the content of glycerol in the slurry used for the impregnation in step a) and contained in the prepreg provided in step b) is 12 to 20 wt%, based on the total weight of the ceramic powder in the slurry.

6. The process of any of claims 1 to 5, wherein the volume ratio of the ceramic powder in the slurry contained in the prepreg provided in step b) is less than 60 vol%, based on the total volume of the slurry.

7. A process for the preparation of a laminate of prepregs for a ceramic matrix composite material, comprising:
providing two or more prepregs in accordance with the process of any of claims 1 to 6, and laminating the prepregs with each other.

8. A process for the preparation of a ceramic matrix composite body, said process comprising:
either providing a prepreg in accordance with the process of claims 1 to 6, and sintering the prepreg;
or providing a laminate in accordance with the process of claim 7, and sintering the laminate;
or providing a ceramic matric composite green body in accordance with a process comprising:
providing a prepreg in accordance with the process of any of claims 1 to 6, or
providing a laminate of prepregs in accordance with the process of claim 7,
further drying the prepreg or the laminate of prepregs., and sintering the green body.

9. A prepreg for a ceramic matrix composite material, said prepreg comprising an arrangement of ceramic fibers impregnated with a slurry of a ceramic powder, wherein the slurry contains:
45 vol% or more, based on the total volume of the slurry, of the ceramic powder,
10 to 20 wt%, based on the total weight of the ceramic powder in the slurry, of glycerol,
0 to 2 wt%, based on the total weight of the ceramic powder in the slurry, of an organic binder, and
water.

10. The prepreg of claim 9, wherein the slurry contains water in an amount that the slurry renders the surface of the prepreg tacky, where the tackiness is such that the peel strength measured with a T-Peel sample made of two laminated prepreg tapes with a width of 25 mm, is at least 0.5 N/25 mm.

11. The prepreg of claim 9 or 10, wherein the prepreg contains an amount of water of 5 to 15 wt%, based on the total weight of the prepreg.

12. The prepreg of any of claims 9 to 11, wherein the slurry contains less than 60 vol% of the ceramic powder, based on the total volume of the slurry.

13. A laminate of prepregs for a ceramic matrix composite material, wherein two or more prepregs in accordance with any one of claims 9 to 12 are laminated with each other.

14. A ceramic matrix composite green body, which is obtainable by providing a prepreg in accordance with any of claims 9 to 12, or a laminate of prepregs in accordance with claim 13, and drying the prepreg or laminate of prepregs,
and which ceramic matrix composite green body comprises:
an arrangement of ceramic fibers impregnated with a ceramic powder,
10 to 20 wt%, based on the total weight of the ceramic powder, of glycerol, and
0 to 2 wt%, based on the total weight of the ceramic powder, of an organic binder.

## Patentansprüche

1. Ein Verfahren zur Herstellung eines Prepregs für einen Keramikmatrix-Verbundwerkstoff, wobei das Verfahren die Schritte umfasst:
a) Imprägnieren einer Anordnung von Keramikfasern mit einem Schlicker eines Keramikpulvers, wobei der Schlicker enthält:
10 bis 40 Vol.-%, bezogen auf das Gesamtvolumen des Schlickers, des Keramikpulvers,
10 bis 20 Gew.-%, bezogen auf das Gesamtgewicht des Keramikpulvers im Schlicker, an Glycerin,
0 bis 2 Gew.-%, bezogen auf das Gesamtgewicht des Keramikpulvers im Schlicker, eines organischen Bindemittels und
Wasser;
b) Reduzieren des Wassergehalts im Schlicker, der von der Anordnung von Keramikfasern nach dem Imprägnieren zurückgehalten wird, um den Volumenanteil des Keramikpulvers im Schlicker zu erhöhen und um ein Prepreg bereitzustellen, das einen Schlicker eines Keramikpulvers mit einem Volumenanteil des Keramikpulvers von 45 Vol.-% oder mehr im Schlicker enthält.

2. Das Verfahren nach Anspruch 1, wobei das Reduzieren des Wassergehalts des Schlickers in Schritt b) das Konditionieren der imprägnierten Anordnung von Keramikfasern bei einer Temperatur von 20 bis 40°C und einer relativen Feuchtigkeit von 60 bis 90% für einen Zeitraum von 2 bis 24 h umfasst.

3. Das Verfahren nach Anspruch 1 oder 2, wobei das Reduzieren des Wassergehalts des Schlickers in Schritt b) so durchgeführt wird, dass ein Prepreg bereitgestellt wird, das einen Schlicker von Keramikteilchen mit Glycerin und einer ausreichenden Menge an Wasser enthält, um eine klebrige Oberfläche des Prepregs zu ergeben, wobei die Klebrigkeit so gewählt ist, dass die Schälfestigkeit, gemessen mit einer T-Schälprobe, die aus zwei laminierten Prepreg-Bändern mit einer Breite von 25 mm besteht, mindestens 0,5 N/25 mm beträgt.

4. Das Verfahren nach einem der Ansprüche 1 bis 3, wobei das in Schritt b) bereitgestellte Prepreg Wasser in einer Menge von 5 bis 15 Gew.-%, bezogen auf das Gesamtgewicht des Prepregs, enthält.

5. Das Verfahren nach einem der Ansprüche 1 bis 4, wobei der Gehalt an Glycerin im Schlicker, der für das Imprägnieren in Schritt a) verwendet wird und in dem in Schritt b) bereitgestellten Prepreg enthalten ist, 12 bis 20 Gew.-%, bezogen auf das Gesamtgewicht des Keramikpulvers in dem Schlicker, beträgt.

6. Das Verfahren nach einem der Ansprüche 1 bis 5, wobei der Volumenanteil des Keramikpulvers im Schlicker, der in dem in Schritt b) bereitgestellten Prepreg enthalten ist, weniger als 60 Vol.-%, bezogen auf das Gesamtvolumen des Schlickers, beträgt.

7. Ein Verfahren zur Herstellung eines Laminats von Prepregs für einen Keramikmatrix-Verbundwerkstoff, umfassend:
Bereitstellen von zwei oder mehr Prepregs gemäß dem Verfahren nach einem der Ansprüche 1 bis 6 und Laminieren der Prepregs miteinander.

8. Ein Verfahren zur Herstellung eines Keramikmatrix-Verbundkörpers, wobei das Verfahren umfasst:
entweder Bereitstellen eines Prepregs gemäß dem Verfahren nach einem der Ansprüche 1 bis 6 und Sintern des Prepregs;
oder Bereitstellen eines Laminats gemäß dem Verfahren nach Anspruch 7 und Sintern des Laminats;
oder Bereitstellen eines Keramikmatrix-Verbundwerkstoffgrünkörpers gemäß einem Verfahren, das umfasst:
Bereitstellen eines Prepregs gemäß dem Verfahren nach einem der Ansprüche 1 bis 6 oder Bereitstellen eines Laminats von Prepregs gemäß dem Verfahren nach Anspruch 7,
weiteres Trocknen des Prepregs oder des Laminats von Prepregs und Sintern des Grünkörpers.

9. Ein Prepreg für einen Keramikmatrix-Verbundwerkstoff, wobei das Prepreg eine Anordnung von Keramikfasern umfasst, die mit einem Schlicker aus einem Keramikpulver imprägniert sind, wobei der Schlicker enthält:
45 Vol.-% oder mehr, bezogen auf das Gesamtvolumen des Schlickers, des Keramikpulvers,
10 bis 20 Gew.-%, bezogen auf das Gesamtgewicht des Keramikpulvers in dem Schlicker, an Glycerin,
0 bis 2 Gew.-%, bezogen auf das Gesamtgewicht des Keramikpulvers in dem Schlicker, eines organischen Bindemittels und
Wasser.

10. Das Prepreg nach Anspruch 9, wobei der Schlicker Wasser in einer Menge enthält, sodass der Schlicker die Oberfläche des Prepregs klebrig macht, wobei die Klebrigkeit so gewählt ist, dass die Schälfestigkeit, gemessen mit einer T-Schälprobe, die aus zwei laminierten Prepreg-Bändern mit einer Breite von 25 mm besteht, mindestens 0,5 N/25 mm beträgt.

11. Das Prepreg nach Anspruch 9 oder 10, wobei das Prepreg eine Menge an Wasser von 5 bis 15 Gew.-%, bezogen auf das Gesamtgewicht des Prepregs, enthält.

12. Das Prepreg nach einem der Ansprüche 9 bis 11, wobei der Schlicker weniger als 60 Vol.-% des Keramikpulvers, bezogen auf das Gesamtvolumen des Schlickers, enthält.

13. Ein Laminat von Prepregs für einen Keramikmatrix-Verbundwerkstoff, wobei zwei oder mehr Prepregs nach einem der Ansprüche 9 bis 12 miteinander laminiert sind.

14. Ein Keramikmatrix-Verbundwerkstoffgrünkörper, der erhältlich ist durch das Bereitstellen eines Prepregs nach einem der Ansprüche 9 bis 12 oder eines Laminats von Prepregs nach Anspruch 13, und Trocknen des Prepregs oder Laminats der Prepregs,
und wobei der Keramik-Matrix-Verbundwerkstoffgrünkörper umfasst:
eine Anordnung von Keramikfasern, die mit einem Keramikpulver imprägniert sind,
10 bis 20 Gew.-%, bezogen auf das Gesamtgewicht des Keramikpulvers, an Glycerin und
0 bis 2 Gew.-%, bezogen auf das Gesamtgewicht des Keramikpulvers, eines organischen Bindemittels.

## Revendications

1. Procédé pour la préparation d'un préimprégné pour un matériau composite à matrice de céramique, ledit procédé comprenant les étapes suivantes :
a) imprégnation d'un arrangement de fibres de céramique avec une bouillie d'une poudre de céramique, laquelle bouillie contient :
10 à 40 % en volume, par rapport au volume total de la bouillie, de la poudre de céramique,
10 à 20 % en poids, par rapport au poids total de la poudre de céramique dans la bouillie, de glycérol,
0 à 2 % en poids, par rapport au poids total de la poudre de céramique dans la bouillie, d'un liant organique, et
de l'eau ;
b) réduction de la teneur en eau de la bouillie qui est retenue par l'arrangement de fibres de céramique après imprégnation de façon à augmenter le rapport volumique de la poudre de céramique dans la bouillie et à obtenir un préimprégné contenant une bouillie d'une poudre de céramique avec un rapport volumique de la poudre de céramique de 45 % en volume ou plus dans la bouillie.

2. Procédé selon la revendication 1, dans lequel la réduction de la teneur en eau de la bouillie dans l'étape b) comprend le conditionnement de l'arrangement imprégné de fibres de céramique à une température de 20 à 40°C et sous une humidité relative de 60 à 90 % pendant une période de temps de 2 à 24 heures.

3. Procédé selon la revendication 1 ou 2, dans lequel la réduction de la teneur en eau de la bouillie dans l'étape b) est mise en œuvre de façon à obtenir un préimprégné qui contient une bouillie de particules de céramique avec du glycérol et une quantité d'eau suffisante pour qu'il en résulte une surface poisseuse du préimprégné, où la pégosité est telle que la résistance au pelage, mesurée avec un échantillon de pelage en T fait de deux bandes de préimprégné stratifiées ayant une largeur de 25 mm, soit d'au moins 0,5 N/25 mm.

4. Procédé selon l'une quelconque des revendications 1 à 3, dans lequel le préimprégné obtenu dans l'étape b) contient de l'eau en une quantité de 5 à 15 % en poids par rapport au poids total du préimprégné.

5. Procédé selon l'une quelconque des revendications 1 à 4, dans lequel la teneur en glycérol de la bouillie utilisée pour l'imprégnation dans l'étape a) et contenue dans le préimprégné obtenu dans l'étape b) est de 12 à 20 % en poids par rapport au poids total de la poudre de céramique dans la bouillie.

6. Procédé selon l'une quelconque des revendications 1 à 5, dans lequel le rapport volumique de la poudre de céramique dans la bouillie contenue dans le préimprégné obtenu dans l'étape b) est inférieur à 60 % en volume par rapport au volume total de la bouillie.

7. Procédé pour la préparation d'un stratifié de préimprégnés pour un matériau composite à matrice de céramique, comprenant :
l'obtention de deux ou plus préimprégnés conformément au procédé de l'une quelconque des revendications 1 à 6, et
la stratification des préimprégnés les uns avec les autres.

8. Procédé pour la préparation d'un corps composite à matrice de céramique, ledit procédé comprenant :
soit l'obtention d'un préimprégné conformément au procédé des revendications 1 à 6, et le frittage du préimprégné ;
soit l'obtention d'un stratifié conformément au procédé de la revendication 7, et le frittage du stratifié ;
soit l'obtention d'un corps cru composite à matrice de céramique conformément à un procédé comprenant :
l'obtention d'un préimprégné conformément au procédé de l'une quelconque des revendications 1 à 6, ou
l'obtention d'un stratifié de préimprégnés conformément au procédé de la revendication 7,
en outre le séchage du préimprégné ou du stratifié de préimprégnés, et le frittage du corps cru.

9. Préimprégné pour un matériau composite à matrice de céramique, ledit préimprégné comprenant un arrangement de fibres de céramique imprégnées avec une bouillie d'une poudre de céramique, dans lequel la bouillie contient :
45 % en volume ou plus, par rapport au volume total de la bouillie, de la poudre de céramique,
10 à 20 % en poids, par rapport au poids total de la poudre de céramique dans la bouillie, de glycérol,
0 à 2 % en poids, par rapport au poids total de la poudre de céramique dans la bouillie, d'un liant organique, et
de l'eau.

10. Préimprégné selon la revendication 9, dans lequel la bouillie contient de l'eau en une quantité telle que la bouillie rende poisseuse la surface du préimprégné, où la pégosité est telle que la résistance au pelage mesurée avec un échantillon de pelage en T fait de deux bandes de préimprégné stratifiées ayant une largeur de 25 mm, soit d'au moins 0,5 N/25 mm.

11. Préimprégné selon la revendication 9 ou 10, ledit préimprégné contenant une quantité d'eau de 5 à 15 % en poids par rapport au poids total du préimprégné.

12. Préimprégné selon l'une quelconque des revendications 9 à 11, dans lequel la bouillie contient moins de 60 % en volume de la poudre de céramique, par rapport au volume total de la bouillie.

13. Stratifié de préimprégnés pour un matériau composite à matrice de céramique, dans lequel deux ou plus préimprégnés selon l'une quelconque des revendications 9 à 12 sont stratifiés les uns avec les autres.

14. Corps cru composite à matrice de céramique, qui peut être obtenu par obtention d'un préimprégné selon l'une quelconque des revendications 9 à 12, ou d'un stratifié de préimprégnés selon la revendication 13, et séchage du préimprégné ou du stratifié de préimprégnés,
et ledit corps cru composite à matrice de céramique comprenant :
un arrangement de fibres de céramique imprégnées avec une poudre de céramique,
10 à 20 % en poids, par rapport au poids total de la poudre de céramique, de glycérol, et
0 à 2 % en poids, par rapport au poids total de la poudre de céramique, d'un liant organique.
